(19) Europäisches Patentamt
European Patent Office
Office européen des brevets

(11) EP 3 287 493 A1

(12) **EUROPÄISCHE PATENTANMELDUNG**

(43) Veröffentlichungstag:
**28.02.2018 Patentblatt 2018/09**

(51) Int Cl.:
***C08L 67/02*** *(2006.01)* ***B29C 65/16*** *(2006.01)*
***B29C 65/00*** *(2006.01)*

(21) Anmeldenummer: **16185856.8**

(22) Anmeldetag: **26.08.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **LANXESS Deutschland GmbH**
**50569 Köln (DE)**

(72) Erfinder:
- **Morick, Joachim**
  **51371 Leverkusen (DE)**
- **Neuwald, Boris**
  **50733 Koln (DE)**
- **Bienmüller Matthias**
  **47803 Krefeld (DE)**

(54) **POLYESTERZUSAMMENSETZUNGEN**

(57) Die Erfindung betrifft neue verstärkte Zusammensetzungen auf Basis von Polybutylenterephthalat, Polyethylenterephthalat und Styrol-Acrylnitril-Copolymerisat, deren Verwendung zur Herstellung lasertransparenter Erzeugnisse und deren Einsatz zum Laserdurchstrahlschweißen sowie ein Verfahren zur Steigerung der Lasertransparenz verstärkter Polybutylenterephthalat und Polyethylenterephthalat basierter Erzeugnisse.

EP 3 287 493 A1

## Beschreibung

Die Erfindung betrifft neue verstärkte Zusammensetzungen auf Basis von Polybutylenterephthalat, Polyethylenterephthalat und Styrol-Acrylnitril-Copolymerisat, deren Verwendung zur Herstellung lasertransparenter Erzeugnisse und deren Einsatz zum Laserdurchstrahlschweißen sowie ein Verfahren zur Steigerung der Lasertransparenz verstärkter Polybutylenterephthalat und Polyethylenterephthalat basierter Erzeugnisse.

Grundlegende Prinzipien des Laserdurchstrahlschweißens sind in der Fachliteratur beschrieben (Kunststoffe 87, (1997) 3, 348 - 350**;** Kunststoffe 88, (1998), 2, 210 - 212**;** Kunststoffe 87 (1997) 11, 1632 - 1640**;** Plastverarbeiter 50 (1999) 4, 18 - 19**;** Plastverarbeiter 46 (1995) 9, 42 - 46**).**

Beim Laserdurchstrahlschweißen handelt sich um einen einstufigen Prozess, bei dem die Erwärmung des Kunststoffes und der Fügevorgang nahezu gleichzeitig ablaufen. Dabei muss ein Fügepartner im Bereich der Laserwellenlänge einen hohen Transmissionsgrad und der andere einen hohen Absorptionsgrad aufweisen. Vor dem Schweißprozess werden die zu verschweißenden Bauteile in der gewünschten Endlage positioniert und der Fügedruck aufgebracht.

Der transparente Fügepartner wird vom Laserstrahl ohne nennenswerte Erwärmung durchstrahlt. Erst im zweiten Fügepartner wird der Laserstrahl in einer oberflächennahen Schicht vollständig absorbiert, wobei die Laserenergie in Wärmeenergie umgewandelt und der Kunststoff aufgeschmolzen wird. Aufgrund von Wärmeleitungsprozessen wird auch das transparente Bauteil im Bereich der Fügezone plastifiziert. Durch den von außen aufgebrachten sowie durch den aus der Ausdehnung der Kunststoffschmelze resultierenden inneren Fügedruck kommt es zu einer stoffschlüssigen Verbindung der Bauteile. Übliche, beim Laserdurchstrahlschweißen eingesetzte Laserquellen sind Hochleistungsdiodenlaser (HDL, $\lambda$ = 900-1100 nm) und Festkörperlaser (Faserlaser), insbesondere Nd:YAG-Laser, $\lambda$ = 1060-1090 nm, da nahezu alle naturfarbenen und unverstärkten Thermoplaste in diesem Wellenlängenbereich einen hohen Transmissionsgrad aufweisen, was eine wesentliche Voraussetzung des transparenten Fügepartners ist. Dem absorbierenden Fügepartner werden absorbierende Pigmente zugesetzt, bei denen es sich meist um Rußpigmentierungen handelt, woraus die für das menschliche Auge schwarze Farbe dieser Bauteile resultiert. Es existieren jedoch auch so genannte Infrarotabsorber, die im sichtbaren Wellenlängenbereich eine nicht schwarze Farbe aufweisen können. Siehe: (https://de.wikipedia.org/wiki/Laserdurchstrahlschwei%C3%9Fen).

Laserschweißen von teilkristallinen Thermoplasten ist prinzipiell schwieriger als bei amorphen Produkten, da der Laserstrahl an den Sphärolithen gestreut wird. Dieses allen teilkristallinen Kunststoffen eigene Problem ist bei Polybutylenterephthalat (PBT) besonders ausgeprägt: Im Vergleich zu einer gleich dicken Polyamid 6 (PA 6)-Platte ist PBT viel weniger laserlichttransparent, weil hier aufgrund der ausgeprägten Streuneigung der rückwärts gerichtete Streuanteil höher ist. Außerdem wird der hindurchtretende Strahl stärker aufgeweitet bzw. gestreut.

Generell erfolgt die Bestimmung der Lasertransparenz (LT) und so auch im Rahmen der vorliegenden Erfindung photometrisch bei Wellenlängen im Bereich von 780 bis 1100nm. Der Messaufbau war dabei wie folgt dargestellt: Als Strahlungsquelle diente eine Halogenlampe, welche ein Spektrum von sichtbarem Licht bis ins nahe Infrarot ausstrahlt. Unterhalb der Lichtquelle wurde das ausgestrahlte Licht mittels einer Lochblende fokussiert. In einem Abstand von 70 mm unter der Strahlungsquelle wurde die Testplatte positioniert. Dabei handelte es sich um spritzgegossene Testplatten der Abmessung 60 x 40 x 2 $mm^3$. Die Platte wurde so positioniert, dass der Lichtstrahl die Platte in der Mitte (Schnittpunkt der Diagonalen) mit einem Radius von 5 mm trifft, bzw. durchstrahlt. Mittels zweier Kantenfilter im Nachgang der Testplatte wurde der Wellenlängenbereich des durchstrahlten Lichtspektrums auf den Bereich von 780 bis 1100nm reduziert. Die Strahlungsintensität des gefilterten Lichts wurde mit Hilfe eines Photodioden-Detektors ermittelt. Dabei wurde als 100%-Referenz der leere Strahlengang verwendet. Es wurde nicht nur bei einer Wellenlänge, sondern in einem Spektralbereich gemessen, der alle z.Zt. für Laserdurchstrahlschweißvorgänge eingesetzte Laserwellenlängen im Bereich von 780 bis 1100nm umfasst.

Eine zu geringe Lasertransparenz kann zu verlängerter Zykluszeit beim Laserschweißvorgang führen, fehlerhafte Teile zur Folge haben, oder die Laserschweißung sogar unmöglich machen. Bis zu einem gewissen Maß lassen sich diese Nachteile durch Erhöhung der Schweißzeit kompensieren. Bei längerer Schweißdauer steigt aber die Wahrscheinlichkeit, dass das Material verbrennt oder sich zersetzt.

Liegt die durchschnittliche Lasertransparenz auf einem eher niedrigen Niveau, können sich Schwankungen besonders negativ auswirken, so dass der Schweißvorgang nicht mehr innerhalb eines zulässigen Prozessfensters geführt werden kann. Auch hier sind Beschädigungen die Folge. Da die Laserschweißung gewöhnlich der letzte Schritt einer Produktionskette ist, bedeuten fehlerhafte Teile an dieser Stelle den Verlust des gesamten bis dahin geschaffenen Wertes.

Deshalb sind zur Erhöhung der Lasertransparenz (LT) von Polyestern, insbesondere PBT verschiedene Ansätze bekannt. Ein Ansatz ist das Mischen des wenig lasertransparenten PBTs mit einem hoch lasertransparenten Mischungspartner. Gemäß EP 2 949 703 A1**,** JP2004/315805A1 und DE-A1-10330722 wird dazu Polyethylenterephthalat (PET) sowie ggf. weitere Additive in Form von Phosphor-enthaltenden Verbindungen oder Polycarbonat eingesetzt.

Nachteil dieser Lösungen des Standes der Technik ist, dass zwar PET die Lasertransparenz positiv beeinflusst,

die weiteren Zusätze aber entweder die Lasertransparenz herabsetzen oder aber die Hydrolysestabilität und/oder die mechanischen Eigenschaften daraus hergestellter Erzeugnisse beeinträchtigt wird bzw. werden.

Aufgabe der vorliegenden Erfindung war deshalb die Erhöhung der Lasertransparenz von verstärkten Erzeugnissen auf Basis von PBT/PET-Blends unter Beibehaltung der Hydrolysestabilität oder sogar Verbesserung derselben und ohne Reduktion mechanischer Kennwerte, insbesondere bei der Biegefestigkeit oder Schlagzähigkeit.

Die Lösung der Aufgabe und Gegenstand der vorliegenden Erfindung sind Zusammensetzungen und daraus herzustellende Erzeugnisse enthaltend A) Polybutylenterephthalat, B) Polyethylenterephthalat, C) wenigstens ein Styrol-Acrylnitril-Copolymerisat und D) wenigstens einen Verstärkungsstoff.

Überraschenderweise führt der Zusatz wenigstens eines Styrol-Acrylnitril-Copolymerisats zu erfindungsgemäßen Zusammensetzungen und daraus resultierenden Erzeugnissen, die einerseits eine verbesserte Lasertransparenz aufweisen, gleichzeitig jedoch gegenüber dem Stand der Technik hydrolysestabil sind ohne dass Nachteile bei den mechanischen Kennwerten auftreten.

Der Zusatz wenigstens eines Styrol-Acrylnitril-Copolymerisats zu Blends aus PBT und PET ermöglicht das Laserschweißen von verstärkten Erzeugnissen, die bisher dem Laserschweißen aufgrund mangelnder Lasertransparenz nicht unterzogen werden konnten. Dadurch werden Anwendungen zugänglich, die zuvor anderen Fügeverfahren vorbehalten waren. Alternativ können Laserfügeverfahren mit niedrigerer Laserleistung angewandt werden, was die Lebensdauer des einzusetzenden Lasers verlängert und somit die Wirtschaftlichkeit von Laserdurchstrahlschweißverfahren verbessert.

Zudem zeichnen sich die lasertransparenten Erzeugnisse aus erfindungsgemäßen Zusammensetzungen durch einen verbesserten Oberflächeneindruck aus, welcher sich in höherem Glanz, einer ruhigeren bzw. glatteren Oberfläche und in einem besseren Farbeindruck zeigt.

Definitionen

Verstärkte Zusammensetzungen oder Erzeugnisse im Sinne der vorliegenden Erfindung zeichnen sich durch die Anwesenheit wenigstens eines Füll- oder Verstärkungsstoffes aus.

Gute mechanische Eigenschaften im Sinne der vorliegenden Erfindung zeichnen sich im Falle erfindungsgemäß herzustellender Erzeugnisse durch hohe Werte bei der Izod Schlagzähigkeit unter Beibehaltung hoher Werte beim Biegemodul aus. Die Schlagzähigkeit beschreibt die Fähigkeit eines Werkstoffes, Stoßenergie und Schlagenergie zu absorbieren, ohne zu brechen. Die Prüfung der Izod Schlagzähigkeit nach ISO 180 ist eine Standard-Methode zur Bestimmung der Schlagzähigkeit von Materialien. Hierbei wird ein Arm eines Pendelschlagwerks zunächst in einer bestimmten Höhe gehalten (= konstante potentielle Energie) und schließlich freigegeben. Der Arm trifft auf die Probe wobei diese bricht. Von der Energie, die durch die Probe absorbiert wird, wird die Aufprallenergie bestimmt. Die Schlagzähigkeit wird berechnet als das Verhältnis aus Schlagarbeit und Probekörperquerschnitt (Maßeinheit $kJ/m^2$). Die Schlagzähigkeit wurde im Rahmen der vorliegenden Erfindung gemäß ISO 180-1 U bei 23°C bestimmt.

Gemäß "http://de.wikipedia.org/wiki/Biegeversuch" wird das Biegemodul im 3-Punkt-Biegeversuch ermittelt, wobei eine Prüfprobe auf zwei Auflagen positioniert und in der Mitte mit einem Prüfstempel belastet wird. Das Biegemodul berechnet sich bei einer Flachprobe dann wie folgt:

$$E = \frac{l_v^3 (X_H - X_L)}{4 D_L b a^3}$$

wobei $E$ = Biegemodul in $kN/mm^2$; $l_v$ = Stützweite in mm; $X_H$ = Ende der Biegemodulermittlung in kN; $X_L$ = Beginn der Biegemodulermittlung in kN; $D_L$ = Durchbiegung in mm zwischen $X_H$ und $X_L$; $b$ = Probenbreite in mm; $a$ = Probendicke in mm. Das Biegemodul wurde im Rahmen der vorliegenden Erfindung gemäß ISO178-A bei 23°C bestimmt.

**Bevorzugte Ausführungsformen der Erfindung**

Vorzugsweise betrifft die vorliegende Erfindung Zusammensetzungen und daraus herzustellende lasertransparente Erzeugnisse enthaltend

A) Polybutylenterephthalat,

B) Polyethylenterephthalat,

C) wenigstens ein Styrol-Acrylnitril-Copolymerisat,

D) wenigstens einen Verstärkungsstoff und

E) wenigstens einen Hydrolysestabilisator.

Vorzugsweise betrifft die vorliegende Erfindung Zusammensetzungen und daraus herzustellende lasertransparente Erzeugnisse enthaltend

A) auf 100 Massenanteile Polybutylenterephtalat,

B) 0,5 bis 34 Massenanteile Polyethylenterephtalat,

C) 0,5 bis 34 Massenanteile wenigstens eines Styrol-Acrylnitril-Copolymerisats und

D) 10 bis 200 Massenanteile wenigstens eines Verstärkungsstoffes.

Vorzugsweise betrifft die vorliegende Erfindung Zusammensetzungen und daraus herzustellende lasertransparente Erzeugnisse enthaltend

A) auf 100 Massenanteile Polybutylenterephtalat,

B) 5 bis 15 Massenanteile Polyethylenterephtalat,

C) 5 bis 15 Massenanteile wenigstens eines Styrol-Acrylnitril-Copolymerisats und

D) 20 bis 100 Massenanteile wenigstens eines Verstärkungsstoffes.

Vorzugsweise betrifft die vorliegende Erfindung Zusammensetzungen und daraus herzustellende lasertransparente Erzeugnisse enthaltend

A) auf 100 Massenanteile Polybutylenterephtalat,

B) 0,5 bis 34 Massenanteile Polyethylenterephtalat,

C) 0,5 bis 34 Massenanteile wenigstens eines Styrol-Acrylnitril-Copolymerisats,

D) 10 bis 200 Massenanteile wenigstens eines Verstärkungsstoffes und

E) 0,01 bis 30 Massenanteile wenigstens eines Hydrolysestabilisators.

Vorzugsweise betrifft die vorliegende Erfindung Zusammensetzungen und daraus herzustellende lasertransparente Erzeugnisse enthaltend

A) auf 100 Massenanteile Polybutylenterephtalat,

B) 5 bis 15 Massenanteile Polyethylenterephtalat,

C) 5 bis 15 Massenanteile wenigstens eines Styrol-Acrylnitril-Copolymerisats,

D) 20 bis 100 Massenanteile wenigstens eines Verstärkungsstoffes und

E) 2 bis 15 Massenanteile wenigstens eines Hydrolysestabilisators.

Die vorliegende Erfindung betrifft auch die Verwendung wenigstens eines Styrol-Acrylnitril-Copolymerisats, vorzugsweise in Kombination mit PET, besonders bevorzugt in Form einer erfindungsgemäßen Zusammensetzung, zur Herstellung verstärkter, lasertransparenter, Polybutylenterephthalat basierter Erzeugnisse.

Die Erfindung betrifft ferner die Verwendung wenigstens eines Styrol-Acrylnitril-Copolymerisats zur Verbesserung der Lasertransparent verstärkter, PET und PBT basierter Erzeugnisse.

Die Erfindung betrifft zudem die Verwendung von Zusammensetzungen enthaltend A) PBT, B) PET, C) wenigstens ein Styrol-Acrylnitril-Copolymerisat und D) wenigstens einen Verstärkungsstoff zur Herstellung lasertransparenter Erzeugnisse.

Ferner betrifft die Erfindung ein Verfahren zur Steigerung der Lasertransparenz verstärkter, PBT und PET basierter Erzeugnisse, durch Zusatz wenigstens eines Styrol-Acrylnitril-Copolymerisats zu den zur Verarbeitung vorgesehenen Formmassen.

Zur Klarstellung sei angemerkt, dass vom Rahmen der vorliegenden Erfindung alle nachfolgend aufgeführten allgemeinen oder in Vorzugsbereichen genannten Definitionen und Parameter in beliebigen Kombinationen umfasst sind. Die vorliegende Erfindung betrifft die erfindungsgemäßen Zusammensetzungen, daraus herzustellende Formmassen, sowie wiederum aus den Formmassen herzustellende Erzeugnisse einschließlich laserverschweißte Erzeugnisse, wovon wenigstens eine Komponente eine erfindungsgemäße Zusammensetzung enthält. Zitierte Normen gelten in der zum Anmeldetag gültigen Fassung sofern nicht anders angegeben.

Die Zubereitung erfindungsgemäßer Zusammensetzungen für die Herstellung von Formmassen für den weiteren Einsatz zwecks Herstellung lasertransparenter Erzeugnisse, vorzugsweise durch Spritzguss, in der Extrusion oder zum Blasformen, erfolgt durch Mischen der einzelnen Komponenten in wenigstens einem Mischaggregat, vorzugsweise einem Compounder, besonders bevorzugt einem gleichsinnig drehenden Zweiwellenextruder. Hierdurch werden als Zwischenprodukte Formmassen erhalten. Diese Formmassen - auch als thermoplastische Formmassen bezeichnet - können entweder ausschließlich aus den Komponenten A), B), C) und D) bestehen, oder aber zusätzlich zu den Komponenten A), B), C) und D) noch weitere Komponenten enthalten, insbesondere A), B), C), D) und E).

## Komponente A)

Das erfindungsgemäß als Komponente A) einzusetzende Polybutylenterephthalat (PBT) [CAS Nr. 24968-12-5] wird aus Terephthalsäure oder ihren reaktionsfähigen Derivaten und Butandiol nach bekannten Methoden hergestellt (Kunststoff-Handbuch, Bd. VIII, S. 695 ff, Karl Hanser Verlag, München 1973).

Bevorzugt enthält das als Komponente A) einzusetzende PBT mindestens 80 Mol-%, vorzugsweise mindestens 90 Mol-%, bezogen auf die Dicarbonsäure, Terephthalsäurereste.

Das erfindungsgemäß als Komponente A) einzusetzende PBT kann in einer Ausführungsform neben Terephthalsäureresten bis zu 20 Mol-% Reste anderer aromatischer Dicarbonsäuren mit 8 bis 14 C-Atomen oder Reste aliphatischer Dicarbonsäuren mit 4 bis 12 C-Atomen enthalten, insbesondere Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure, Cyclohexandicarbonsäure, 2,5-Furandicarbonsäure.

Das erfindungsgemäß als Komponente A) einzusetzende PBT kann in einer Ausführungsform neben Butandiol bis zu 20 Mol-% andere aliphatische Diole mit 3 bis 12 C-Atomen oder bis zu 20 Mol -% cycloaliphatische Diole mit 6 bis 21 C-Atomen enthalten, bevorzugt Reste von Propandiol-1,3, 2-Ethylpropandiol-1,3, Neopentylglykol, Pentan-diol-1,5, Hexandiol-1.6, 1,4-Cyclohexandimethanol, 3-Methylpentandiol-2,4, 2-Methylpentandiol-2,4, 2,2,4-Trimethylpentandiol-1,3, 2,2,4-Trimethylpentandiol-1,5, 2-Ethylhexandiol-1,3, 2,2-Diethylpropandiol-1,3, Hexandiol-2,5, 1,4-Di-(ß-hydroxyethoxy)-benzol, 2,2-Bis-(4-hydroxycyclohexyl)-propan, 2,4-Dihydroxy-1,1,3,3-tetramethylcyclobutan,2,2-bis-(3-β-hydroxyethoxyphenyl)-propan und 2,2-bis-(4-hydroxypropoxyphenyl)-propan.

Bevorzugt als Komponente A) einzusetzendes PBT hat eine intrinsische Viskosität nach EN-ISO 1628/5 im Bereich von 40 bis 170cm$^3$/g, besonders bevorzugt im Bereich von 50 bis 150cm$^3$/g, ganz besonders bevorzugt im Bereich von 65 bis 135cm$^3$/g, jeweils gemessen im Ubbelohde Viskosimeter in Phenol/o-Dichlorbenzol (1:1 Gew.-Teile) bei 25°C. Die intrinsische Viskosität *iV,* auch als Staudinger-Index oder Grenzviskosität bezeichnet, ist nach der Mark-Houwink-Gleichung proportional zur mittleren Molekülmasse und ist die Extrapolation der Viskositätszahl VN für den Fall verschwindender Polymerkonzentrationen. Sie kann aus Messreihen oder durch die Verwendung geeigneter Näherungsverfahren (z. B. Billmeyer) abgeschätzt werden. Die VN [ml/g] erhält man aus der Messung der Lösungsviskosität im Kapillar-Viskosimeter, beispielsweise Ubbelohde-Viskosimeter. Die Lösungsviskosität ist ein Maß für das mittlere Molekulargewicht eines Kunststoffs. Die Bestimmung erfolgt an gelöstem Polymer, wobei unterschiedliche Lösungsmittel (m-Kresol, Tetrachlorethan, Phenol, 1,2-Dichlorbenzol, etc) und Konzentrationen zum Einsatz kommen. Durch die Viskositätszahl VN ist eine Kontrolle der Verarbeitungs- und Gebrauchseigenschaften von Kunststoffen möglich. Eine thermische Beanspruchung des Polymers, Alterungsvorgänge oder das Einwirken von Chemikalien, Bewitterung und Licht können durch vergleichende Messungen untersucht werden. Siehe hierzu auch: http://de.wikipedia.org/wiki/Viskosimetrie und "http://de.wikipedia.org/wiki/Mark-Houwink-Gleichung".

Das erfindungsgemäß als Komponente A) einzusetzende PBT kann auch im Gemisch mit anderen Polymeren eingesetzt werden. Die Herstellung erfindungsgemäß einzusetzender PBT Blends erfolgt durch Compoundieren. Während einer solchen Compoundierung können zudem übliche Additive, insbesondere Entformungsmittel oder Elastomere in der Schmelze zugemischt werden, wodurch die Eigenschaften der Blends verbessert werden.

Erfindungsgemäß einzusetzendes PBT kann als Pocan® B 1300 von der Lanxess Deutschland GmbH, Köln, bezogen werden.

**Komponente B)**

Als Komponente B) wird Polyethylenterephthalat (PET) [CAS Nr. 25038-59-9] eingesetzt. Es können dabei verschiedene PET-Typen zum Einsatz kommen, die sich z. B. durch ihre Viskosität und/oder den darin enthaltenen Katalysatoren unterscheiden. Ebenso können verschiedene PET-Copolymere verwendet werden, worin das PET mit folgenden Monomeren oder Derivaten folgender Monomere modifiziert wurde: Diethylenglykol, Polyethylenglykol, Cyclohexandimenthanol (cis-, trans- oder Mischungen), 2,2,4,4-Tetramethyl-1,3-cyclobutandiol, Norbornan-2,3-Dicarbonsäure, Isophthalsäure, t-Butylisophthalsäure, Natriumhydrogen- 5-sulfoisophthalat, Naphthalendicarbonsäure, Hydroxybenzoesäure, Adipinsäure.

Die Anteile derartiger Comonomere beträgt in der Regel nicht mehr als 5 Massenanteile, vorzugsweise nicht mehr als 2 Massenanteile, bezogen auf 100 Massenanteile von B).

Die einsetzbaren PET-Typen können die allgemein zu dessen Herstellung genutzten Katalysatoren enthalten. Diese umfassen Salze von Ca, Mg, Zr, Mn, Zn, Pb, Sb, Sn, Ge und Ti wie z. B. Oxide, Alkoxide, und/oder von organischen Säuren abgeleitete Salze, wie z. B. Acetate, Oxalate, Citrate und/oder Lactate sowie Glykolate und Komplex-/Chelatverbindungen dieser Metalle sowie Mischung davon. Der Restmetallgehalt dieser Katalysatoren im erfindungsgemäß einzusetzenden PET ist vorzugsweise $\leq$ 300 ppm, besonders bevorzugt $\leq$ 260 ppm.

Das erfindungsgemäß einzusetzende PET besitzt bevorzugt eine intrinsische Viskosität im Bereich von ca. 30 bis 150cm$^3$/g, besonders bevorzugt im Bereich von 40 bis 130cm$^3$/g, insbesondere bevorzugt im Bereich von 50 bis 100cm$^3$/g jeweils gemessen in Phenol/o-Dichlorbenzol (1:1 Gew.-Teile) bei 25°C mittels eines Ubbelohde Viskosimeters gemäß ISO 1628.

**Komponente C)**

Als Komponente C) wird wenigstens ein Styrol-Acrylnitril-Copolymerisat auf Basis von Vinylaromaten (C.1) und Vinylcyaniden (C.2) eingesetzt.

Vorzugsweise enthalten 100 Massenanteile eines Copolymerisats C)

(C.1) 50 bis 99 Massenanteile Vinylaromaten und/oder kernsubstituierte Vinylaromaten, und

(C.2) 1 bis 50 Massenanteile Vinylcyanide.

Bevorzugte Verbindungen (C.1) sind Styrol, $\alpha$-Methylstyrol, p-Methylstyrol, p-Chlorstyrol, und/oder Methacrylsäure-($C_1$-$C_8$)-Alkylester, insbesondere Methylmethacrylat, Ethylmethacrylat.

Bevorzugte Vinylcyanide sind ungesättigte Nitrile, insbesondere Acrylnitril oder Methacrylnitril, und/oder (Meth)Acrylsäure-($C_1$-$C_8$)-Alkylester, insbesondere Methylmethacrylat, n-Butylacrylat, t-Butylacrylat, und/oder Derivate ungesättigter Carbonsäuren.

Bevorzugte Derivate ungesättigter Carbonsäuren sind deren Anhydride oder Imide, insbesondere Maleinsäureanhydrid oder N-Phenyl-Maleinimid.

Besonders bevorzugte Monomere (C.1) sind ausgewählt aus mindestens einem der Monomere Styrol, $\alpha$-Methylstyrol und Methylmethacrylat.

Bevorzugte Monomere (C.2) sind ausgewählt aus mindestens einem der Monomere Acrylnitril, Maleinsäureanhydrid und Methylmethacrylat.

Ganz besonders bevorzugte Monomere sind (C.1) Styrol und (C.2) Acrylnitril. Insbesondere bevorzugt ist ein Styrol-Acrylnitril-Copolymerisat, das als SAN mit der [CAS Nr. 9003-54-7] bekannt und bei der Styrolution GmbH, Frankfurt am Main, erhältlich ist.

**Komponente D)**

Vorzugsweise werden als Komponente D) **Glasfasern** eingesetzt werden. Diese haben bevorzugt einen Faserdurchmesser im Bereich von 7 und 18 $\mu$m, besonders bevorzugt im Bereich von 9 und 15 $\mu$m, und werden als Endlosfasern oder als geschnittene oder gemahlene Glasfasern zugesetzt.

Gemäß "http://de.wikipedia.org/wiki/Faser-Kunststoff-Verbund" unterscheidet man a) geschnittene Fasern, auch als Kurzfasern bezeichnet, mit einer Länge im Bereich von 0,1 bis 1 mm, b) Langfasern mit einer Länge im Bereich von 1 bis 50 mm und c) Endlosfasern mit einer Länge L > 50 mm. Faserlängen können beispielsweise durch Microfokus-Röntgen-Computertomographie ($\mu$-CT) bestimmt werden; **DGZfP-Jahrestagung 2007-Vortrag 47.**

Die Fasern werden bevorzugt mit einem geeigneten Schlichtesystem oder einem Haftvermittler bzw. Haftvermittlersystem, besonders bevorzugt auf Silanbasis, ausgerüstet.

Ganz besonders bevorzugte Haftvermittler auf Silanbasis für die Vorbehandlung sind Silanverbindungen der allgemeinen Formel (I)

$$(X\text{-}(CH_2)_q)_k\text{-}Si\text{-}(O\text{-}C_rH_{2r+1})_{4-k} \qquad (I)$$

in der die Substituenten folgende Bedeutung haben:

X: $NH_2$-, HO-,

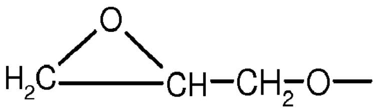

q: eine ganze Zahl von 2 bis 10, bevorzugt 3 bis 4,

r: eine ganze Zahl von 1 bis 5, bevorzugt 1 bis 2,

k: eine ganze Zahl von 1 bis 3, bevorzugt 1.

Insbesondere bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Für die Ausrüstung der Glasfasern werden die Silanverbindungen bevorzugt in Mengen im Bereich von 0,05 bis 2 Massenanteile, besonders bevorzugt im Bereich von 0,25 bis 1,5 Massenanteile und insbesondere im Bereich von 0,5 bis 1 Massenanteile bezogen auf 100 Massenanteil Glasfasern zur Oberflächenbeschichtung eingesetzt.

Die Glasfasern können bedingt durch die Verarbeitung zur Formmasse (Compoundierung) bzw. dem daraus herzustellenden Erzeugnis in der Formmasse bzw. im Erzeugnis einen kleineren d97- bzw. d50-Wert aufweisen, als die ursprünglich eingesetzten Glasfasern. Die Glasfasern können bedingt durch die Verarbeitung zur Formmasse bzw. zum Enderzeugnis in der Formmasse bzw. im Enderzeugnis kürzere Längenverteilungen als ursprünglich eingesetzt aufweisen.

**Komponente E)**

Als Hydrolysestabilisator werden vorzugsweise epoxidierte natürliche Öle, epoxidierte Fettsäureester oder synthetische epoxydierte Verbindungen eingesetzt. Bevorzugt haben diese Verbindungen wenigstens eine endständige Epoxid-Gruppe.

Bevorzugte **epoxidierte natürliche Öle** basieren auf wenigstens einem Öl aus der Gruppe Olivenöl, Leinöl, Kokosnussöl, Erdnussöl, Palmöl, Ricinusöl, Sojabohnenöl oder Lebertran Besonders bevorzugt ist Sojabohnenöl.

Das Molekulargewicht der epoxidierten natürlichen Öle liegt vorzugsweise im Bereich von 500 bis 1000g/mol. Erfindungsgemäß bevorzugt einzusetzende Lein- oder Sojabohnenöle sind Gemische von Trifettsäureglyzeriden, wobei der $C_{18}$-Carbonsäureanteil überwiegt.

Epoxidierte natürliche Öle werden im Allgemeinen nach den für einen Fachmann geläufigen Methoden hergestellt; siehe Angew. Chem. 2000, 112, 2292 - 2310**.**

Bevorzugte **epoxidierte Fettsäureester** erhält man aus gesättigten oder ungesättigten aliphatischen Carbonsäuren mit 10 bis 40 C-Atomen, bevorzugt 16 bis 22 C-Atomen, durch Umsetzung mit aliphatischen gesättigten Alkoholen mit 2 bis 40 C-Atomen, vorzugsweise 2 bis 6 C-Atomen.

Vorzugsweise handelt es sich um 1- oder 2-wertige Carbonsäuren. Besonders bevorzugt wird wenigstens eine Carbonsäure aus der Gruppe Pelargonsäure, Palmitinsäure, Laurinsäure, Margarinsäure, Dodecandisäure, Behensäure, Stearinsäure, Caprinsäure, Montansäure, Linolsäure, Linolensäure und Ölsäure ausgesucht.

Vorzugsweise einzusetzende aliphatische gesättigte Alkohole sind 1- bis 4-wertig. Besonders bevorzugt wird wenigstens ein Alkohol ausgewählt aus der Gruppe n-Butanol, n-Octanol, Stearylalkohol, Ethylenglykol, Propylenglykol, Neopentylglycol, Pentaerythrit und Glycerin. Insbesondere bevorzugt ist Glycerin.

Es können auch Mischungen verschiedener Ester und / oder Öle eingesetzt werden.

Die Einführung der Epoxid-Funktion in die vorstehend genannten Ester und/oder Öle erfolgt über Reaktion dieser mit epoxidierenden Agentien, vorzugsweise mit Persäuren, insbesondere mit Peressigsäure. Derartige Umsetzungen sind dem Fachmann hinreichend bekannt.

Die Herstellung **synthetischer epoxidierter Verbindungen** ist dem Fachmann ebenfalls bekannt. Bevorzugte synthetische epoxidierte Verbindungen sind:

- Polyglycidyl- oder Poly-(β-methylglycidyl)-ether erhältlich durch Umsetzung einer Verbindung mit mindestens zwei freien alkoholischen oder phenolischen Hydroxygruppen und/oder durch Umsetzung von phenolischen Hydroxygruppen mit einem geeignet substituierten Epichlorhydrin bevorzugt unter alkalischen Bedingungen oder in Anwesenheit eines sauren Katalysators und anschließender Alkalibehandlung.

Bevorzugte Polyglycidyl- oder Poly-(b-methylglycidyl)-ether leiten sich ab von acyclischen Alkoholen, insbesondere Ethylenglykol, Diethylenglykol und höheren Poly-(oxyethylen)-glykolen, Propan-1,2-diol oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimetylpropan, Bistrimethylolpropan, Pentaerythrit, Sorbit sowie von Polyepichlorhydrinen.

Alternativ bevorzugte Polyglycidyl- oder Poly-(β-methylglycidyl)-ether leiten sich ab von cycloaliphatischen Alkoholen, insbesondere 1,3- oder 1,4-Dihydroxycyclohexan, Bis-(4-hydroxycyclohexyl)-methan, 2,2-Bis-(4-hydroxycyclohexyl)-propan oder 1,1-Bis-(hydroxymethyl)-cyclohex-3-en oder sie besitzen aromatische Kerne wie N,N-Bis-8,2-hydroxyethyl)-anilin oder p,p'-Bis-(2-hydroxyethyl-amino)-diphenylmethan.

- Bevorzugte synthetische epoxidierte Verbindungen basieren auf einkernigen Phenolen, auf mehrkernigen Phenolen, oder auf unter sauren Bedingungen erhaltenen Kondensationsprodukten von Phenolen mit Formaldehyd.

Bevorzugte einkernige Phenole sind Resorcin oder Hydrochinon.

Bevorzugte mehrkernige Phenole sind Bis-(4hydroxyphenyl)-methan, 2,2-Bis-(4-hydroxyphenyl)-propan, 2,2-Bis-(3,5-dibrom-4-hydroxyphenyl)-propan oder 4,4'-Dihydroxydiphenylsulfon.

Bevorzugte Kondensationsprodukte von Phenolen mit Formaldehyd sind Phenol-Novolake.

Als **aromatische Epoxid-Verbindungen** kommen vorzugsweise Komponenten mit 2 endständigen Epoxid-Funktionen zu Einsatz.

Vorzugsweise ist die synthetische Epoxid-Verbindung ein oligomeres Reaktionsprodukt aus Bisphenol A mit Epichlorhydrin der Formel (II),

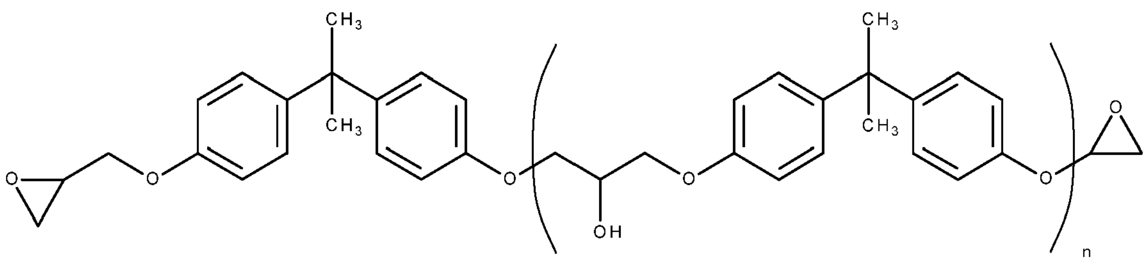

(II)

mit n = 0 bis 10, vorzugsweise n = 1 bis 8, besonders bevorzugt n = 1 bis 6 und n der durchschnittlichen Anzahl an Einheiten im Reaktionsprodukt entspricht.

Bevorzugt besitzt eine erfindungsgemäß einzusetzende synthetische Epoxid-Verbindung einen Erweichungspunkt (Mettler, DIN 51920) im Bereich von 0 bis 150°C, besonders bevorzugt 50°C bis 120°C, ganz besonders bevorzugt im Bereich von 60°C bis 110°C und insbesondere im Bereich von 75°C bis 95°C.

Vorzugsweise einzusetzende synthetische Epoxid-Verbindungen weisen ein Epoxidäquivalent-Gewicht (EEW; DIN16945) im Bereich von 160 bis 2000 g/eq auf, bevorzugt 250 bis 1200 g/eq, besonders bevorzugt im Bereich von 350 bis 1000 g/eq und insbesondere bevorzugt im Bereich von 450 bis 800 g/eq.

Insbesondere bevorzugt wird als Komponente E) ein Poly(Bisphenol A-co-Epichlorhydrin) [CAS Nr. 25068-38-6] eingesetzt, MW ca. 600 bis 1800 g/mol, zu beziehen als Epilox® von Leuna Harze GmbH, Leuna.

**Komponente F)**

In einer Ausführungsform können die erfindungsgemäßen Zusammensetzungen zusätzlich zu den Komponenten A) bis D) oder A) bis E) noch wenigstens ein von den Komponenten C), D) und E) verschiedenes Additiv F) aus der Gruppe Phosphitstabilisatoren, Entformungsmittel, UV-Stabilisatoren, Thermostabilisatoren, Gammastrahlenstabilisatoren, Antistatika, Fließhilfsmittel, Flammschutzmittel, Elastomermodifikatoren, Brandschutzadditive, Emulgatoren, Nukleierungsmittel, Weichmacher, Gleitmittel, Farbstoffe und Pigmente enthalten, mit der Maßgabe, dass dieses Additiv die Lasertransparenz im Wellenlängenbereich im Bereich von 780 bis 1200 nm nicht wesentlich reduziert.

Vorzugsweise werden auf 100 Massenanteile der Komponente A) 0,1 bis 100, besonders bevorzugt 0,3 bis 20 Massenanteile der Komponente F) eingesetzt. Insbesondere bevorzugt enthält die erfindungsgemäße Formmasse neben den Komponenten A) bis F) keine weiteren Bestandteile.

Vorzugsweise weist ein als Komponente F) einzusetzendes Additiv eine Korngröße $\leq$ 1000nm auf, wodurch es sich in der Polymermatrix des PBT zwar löst, nicht aber zu zusätzlicher Streuung der Laserstrahlung führt. Umgekehrt können nicht mit der Polymermatrix mischbare Komponenten mit stark vom PBT abweichendem Brechungsindex zu Streuung der Laserstrahlung führen. Die genannten und weitere geeignete Additive sind zum Beispiel beschrieben in Gächter, Müller, Kunststoff-Additive, 3. Ausgabe, Hanser-Verlag, München, Wien, 1989 und im Plastics Additives Handbook, 5th Edition, Hanser-Verlag, München, 2001**.** Auch die als Komponente F) einzusetzenden Additive können individuell oder in Mischung bzw. in Form von Masterbatchen eingesetzt werden.

Vorzugsweise wird als Komponente F) wenigstens ein **Phosphitstabilisator** eingesetzt. Bevorzugt wird wenigstens ein Phosphitstabilisator der Reihe Tris(2,4-ditert-butylphenyl)phosphit (Irgafos® 168, BASF SE, [CAS Nr. 31570-04-4]), Bis(2,4-di-tert-butylphenyl)pentaerythritol-diphosphit (Ultranox® 626, Chemtura,[CAS Nr. 26741-53-7]), Bis(2,6-di-ter-butyl-4-methylphenyl)pentaerythritol-diphosphit (ADK Stab PEP-36, Adeka, [CAS Nr. 80693-00-1]), Bis(2,4-dicumylphenyl)pentaerythritol-diphosphit (Doverphos® S-9228, Dover Chemical Corporation,[CAS Nr. 154862-43-8]), Tris(nonylphenyl)phosphit (Irgafos® TNPP, BASF SE, [CAS Nr. 26523-78-4]), (2,4,6-tri-t-butylphenol)2-butyl-2-ethyl-1,3-propanediol-phosphit (Ultranox® 641, Chemtura, [CAS Nr. 161717-32-4]) oder Hostanox® P-EPQ eingesetzt.

Vorzugsweise wird als Komponente F) wenigstens ein **Entformungsmittel** eingesetzt. Als bevorzugte Entformungsmittel wird wenigstens eines ausgewählt aus der Reihe Esterwachs(e), Pentaeritrytoltetrastearat (PETS), langkettige Fettsäuren, Salz(e) der langkettigen Fettsäuren, Amidderivat(e) der langkettigen Fettsäuren, Montanwachse sowie niedermolekulare Polyethylen- bzw. Polypropylenwachs(e) oder Ethylen Homo-polymer Wachs(e).

Bevorzugte langkettige Fettsäuren sind Stearinsäure oder Behensäure. Bevorzugte Salze langkettiger Fettsäuren sind Calciumstearat oder Zinkstearat. Bevorzugtes Amidderivat langkettiger Fettsäuren ist Ethylen-bis-stearylamid. Bevorzugte Montanwachse sind Mischungen aus geradkettigen, gesättigten Carbonsäuren mit Kettenlängen von 28 bis 32 C-Atomen.

Als **Thermo-** oder **UV-Stabilisatoren** werden bevorzugt sterisch gehinderte Phenole, Hydrochinone, aromatische sekundäre Amine wie Diphenylamine, substituierte Resorcine, Salicylate, Benzotriazole und Benzophenone, sowie verschieden substituierte Vertreter dieser Gruppen oder deren Mischungen eingesetzt.

Als **Weichmacher** werden bevorzugt Phthalsäuredioctylester, Phthalsäuredibenzylester, Phthalsäurebutylbenzylester, Kohlenwasserstofföle oder N-(n-Butyl)benzolsulfonamid eingesetzt.

Erfindungsgemäß können als weitere Komponenten F) **Elastomermodifikatoren** eingesetzt werden. Bevorzugt werden dabei ein oder mehrere Pfropfpolymerisat(e) eingesetzt.

Als Elastomermodifikatoren einzusetzenden Pfropfpolymerisate basieren auf geeigneten Pfropfgrundlagen, vorzugsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Besonders bevorzugte Elastomermodifikatoren sind ABS-Polymerisate (Emulsions-, Masse- und Suspensions-ABS), wie sie z. B. in der DE-A 2 035 390 oder in der DE-A 2 248 242 bzw. in Ullmann, Enzyklopädie der Technischen Chemie, Bd. 19 (1980), S. 280 ff**.** beschrieben sind. Der Gelanteil der Pfropfgrundlage beträgt mindestens 30 Gew.-%, vorzugsweise mindestens 40 Gew.-% (in Toluol gemessen). ABS bedeutet Acrylnitril-Butadien-Styrol-Copolymerisat [CAS Nr. 9003-56-9] und ist ein synthetisches Terpolymer aus den drei unterschiedlichen Monomerarten Acrylnitril, 1,3-Butadien und Styrol. Es gehört zu den amorphen Thermoplasten. Die Mengenverhältnisse können dabei variieren von 15-35% Acrylnitril, 5-30% Butadien und 40-60% Styrol.

Als Komponente F) einzusetzende Elastomermodifikatoren bzw. Pfropfcopolymerisate werden durch radikalische Polymerisation, z. B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

**Verfahren**

Die Zubereitung erfindungsgemäßer Zusammensetzungen für die Herstellung von Formmassen für den weiteren Einsatz im Spritzguss oder in der Extrusion erfolgt durch Mischen der einzelnen Komponenten in wenigstens

einem Mischaggregat, vorzugsweise einem Compounder. Zur Herstellung eines lasertransparenten Erzeugnisses werden die Formmassen einer Weiterverarbeitung unterzogen, vorzugsweise einem Spritzgussverfahren oder einer Extrusion. Die Verfahren des Spritzgusses sowie der Extrusion thermoplastischer Formmassen sind dem Fachmann bekannt.

Erfindungsgemäße Verfahren zur Herstellung lasertransparenter Erzeugnisse durch Extrusion oder Spritzguss werden bei Schmelzetemperaturen im Bereich von 230 bis 330°C, bevorzugt von 250 bis 300°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar durchgeführt.

Bei der Extrusion unterscheidet man vorzugsweise in Profilextrusion und sequentielle Cooextrusion. Bei der sequentiellen Coextrusion werden zwei unterschiedliche Materialien in alternierender Folge hintereinander ausgestoßen. Auf diese Weise entsteht ein Vorformling mit in Extrusionsrichtung abschnittsweise unterschiedlicher Materialzusammensetzung. Es können bestimmte Artikelabschnitte durch entsprechende Materialauswahl mit spezifisch erforderlichen Eigenschaften ausgestattet werden, beispielsweise für Artikel mit weichen Enden und hartem Mittelteil oder integrierten weichen Faltenbalg-Bereichen (Thielen, Hartwig, Gust, "Blasformen von Kunststoffhohlkörpern", Carl Hanser Verlag, München 2006, Seite 127-129).

Das Verfahren des Spritzgusses zeichnet sich dadurch aus, dass der Rohstoff, bevorzugt in Granulatform, in einem beheizten zylindrischen Hohlraum aufgeschmolzen (plastifiziert) und als Spritzmasse unter Druck in einen temperierten Hohlraum gespritzt wird. Nach dem Abkühlen (Erstarren) der Masse wird das Spritzgussteil entformt.

Man unterscheidet

1. Plastifizieren / Aufschmelzen
2. Einspritzphase (Füllvorgang)
3. Nachdruckphase (wegen thermischer Kontraktion bei der Kristallisation)
4. Entformen.

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte. (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Erzeugnis gefertigt. Notwendig dazu sind immer zwei Werkzeughälften. Beim Spritzguss unterscheidet man folgende Funktionskomplexe:

- Angusssystem
- Formbildende Einsätze
- Entlüftung
- Maschinen- und Kraftaufnahme
- Entformungssystem und Bewegungsübertragung
- Temperierung

Im Gegensatz zum Spritzguss wird bei der Extrusion ein endlos geformter Kunststoffstrang, hier aus einer erfindungsgemäßen Formmasse, im Extruder eingesetzt, wobei der Extruder eine Maschine zur Herstellung thermoplastischer Formstücke ist. Man unterscheidet

Einschneckenextruder und Doppelschneckenextruder sowie die jeweiligen Untergruppen konventioneller Einschneckenextruder, förderwirksamer Einschneckenextruder, gegenläufiger Doppelschneckenextruder und gleichläufiger Doppelschneckenextruder.

Extrusionsanlagen bestehen aus Extruder, Werkzeug, Nachfolgeeinrichtung, Extrusionsblasformen. Extrusionsanlagen zum Herstellen von Profilen bestehen aus: Extruder, Profil-Werkzeug, Kalibrierung, Kühlstrecke, Raupen- und Rollenabzug, Trennvorrichtung und Kipprinne.

Die vorliegende Erfindung betrifft schließlich Laserdurchstrahlschweißverfahren mit durch Extrusion, Profil-Extrusion oder Spritzguss erhaltener Erzeugnisse auf Basis erfindungsgemäßer Zusammensetzungen.

Die genannten Verfahren führen zu Erzeugnissen mit überraschenderweise hervorragender Lasertransparenz in dem für Laserdurchstrahlschweißprozesse relevanten Wellenlängenbereich von 780 bis 1200 nm bei gleichbleibend guten mechanischen Eigenschaften. Darüber hinaus lassen sich die erfindungsgemäßen lasertransparenz-optimierten Erzeugnisse durch Zusatz entsprechender Hydrolysestabilisatoren hervorragend gegen hydrolytischen Abbau stabilisieren, ohne dass es bei der Verarbeitung zu ungewolltem Kettenaufbau und damit verbundenen Verarbeitungsproblemen oder einer Reduktion der Laserverschweißbarkeit kommt.

Die Lasertransparenz (LT) wird im Rahmen der vorliegenden Erfindung photometrisch im gesamten Wellenlängenbereich von 780 bis 1100 nm gemessen bzw. bestimmt, wie im Beispielteil näher ausgeführt ist.

Erfindungsgemäße, durch Laserdurchstrahlschweißen erhältliche Erzeugnisse sind vorzugsweise Materialien für Deckel, Gehäuse, Anbauteile, Sensoren. Durch Laserdurchstrahlschweißen erhältliche Erzeugnisse werden insbesondere in Kraftfahrzeugen, in der Elektronik-, Telekommunikations-, Informations- technologie-, oder in der Computerindustrie, sowie im Haushalts, Sport, in der Medizin- oder in der Unterhaltungsindustrie angewandt bzw. eingesetzt.

Erfindungsgemäß bevorzugt sind Zusammensetzungen und daraus herzustellende Erzeugnisse enthaltend PBT, PET, SAN und Glasfaser(n).

Erfindungsgemäß bevorzugt sind Zusammensetzungen und daraus herzustellende Erzeugnisse enthaltend PBT, PET, SAN, Glasfaser(n) und wenigstens einen Hydrolysestabilisator, vorzugsweise einem Bisphenol-A basierten Epoxyharz.

## Beispiele

Zur Herstellung der erfindungsgemäß beschriebenen Zusammensetzungen wurden die einzelnen Komponenten in einem Zweiwellenextruder (ZSK 26 Mega Compounder der Fa. Coperion Werner & Pfleiderer, Stuttgart, Deutschland) bei Temperaturen im Bereich von 285 bis 310°C in der Schmelze vermischt, als Strang ausgetragen, bis zur Granulierfähigkeit abgekühlt und granuliert. Vor weiteren Schritten wurde das Granulat bei 120°C im Vakuumtrockenschrank für ca. 4h getrocknet.

Die Platten und Prüfkörper für die in der Tabelle 1 aufgeführten Untersuchungen wurden auf einer handelsüblichen Spritzgießmaschine bei einer Massetemperatur im Bereich von 250 bis 270°C und einer Werkzeugtemperatur im Bereich von 80 bis 100°C verspritzt.

### Lasertransparenzmessung

Die Bestimmung der Lasertransparenz (LT) erfolgte photometrisch im gesamten Wellenlängenbereich von 780 bis 1100 nm. Der Messaufbau war wie folgt dargestellt: Als Strahlungsquelle diente eine Halogenlampe, welche ein Spektrum von sichtbarem Licht bis ins nahe Infrarot ausstrahlt. Unterhalb der Lichtquelle wurde das ausgestrahlte Licht mittels einer Lochblende fokussiert. In einem Abstand von 70 mm unter der Strahlungsquelle wurde die Testplatte positioniert. Dabei handelte es sich um spritzgegossene Testplatten der Abmessung 60 x 40 x 2 $mm^3$. Die Platte wurde so positioniert, dass der Lichtstrahl die Platte in der Mitte (Schnittpunkt der Diagonalen) mit einem Radius von 5 mm trifft, bzw. durchstrahlt. Mittels zweier Kantenfilter im Nachgang der Testplatte wurde der Wellenlängenbereich des durchstrahlten Lichtspektrums auf den Bereich von 780 bis 1100nm reduziert. Die Strahlungsintensität des gefilterten Lichts wurde mit Hilfe eines Photodioden-Detektors ermittelt. Dabei wurde als 100%-Referenz der leere Strahlengang verwendet. Bei den in Tabelle 1 aufgeführten Beispielen und Vergleichsbeispielen entspricht "o" einer befriedigenden Lasertransparenz, womit sich bis maximal 1,5 mm Wandstärke ein wirtschaftlicher Laserschweißprozess bewerkstelligen lässt. Vergleichend dazu bedeutet "-" eine um 25% niedrigere Transparenz und "--" eine um 50% niedrigere Transparenz. Eine Kennzeichnung mit "+" in Tabelle 1 bedeutet hinsichtlich Lasertransparenz-Messung einen um 25% höheren Wert als bei "o".

### Biegemodul und Biegefestigkeit

Biegemodul (Einheit Pa) und Biegefestigkeit der aus den erfindungsgemäßen thermoplastischen Formmassen hergestellten Erzeugnisse wurden im Biegeversuch nach ISO 178-A bei 23°C bestimmt. Eine alternative Möglichkeit der Bestimmung bietet EN ISO 527 (http://de.wikipedia.org/wiki/EN_ISO_527-1). Eine mit "o" gekennzeichnete Biegefestigkeit bedeutet in Tabelle 1 eine um 10% reduzierte Biegefestigkeit im Vergleich zu Beispielen mit Kennzeichnung "+".

**Schlagzähigkeit**

Die Schlagzähigkeit der aus den erfindungsgemäßen thermoplastischen Formmassen hergestellten Erzeugnisse in Form von Probekörpern der Maße 80 x 100 x 4 $mm^3$ wurden im Schlagversuch nach ISO 180-1 U bei 23°C bestimmt (Einheit $kJ/m^2$).

**Schlagzähigkeit nach Hydrolyse**

Aus den erfindungsgemäßen Zusammensetzungen hergestellte Erzeugnisse in Form von Probekörpern der Maße 80 x 100 x 4 $mm^3$ wurden in einem Konstantklimaschrank (KMF240 der Firma Binder, Tuttlingen, Deutschland) bei 85°C und 85% relativer Luftfeuchte für 1000 Stunden gelagert. Anschließend wurde die Schlagzähigkeit der gelagerten Erzeugnisse im Schlagversuch nach ISO 180-1 U bei 23°C bestimmt (Einheit $kJ/m^2$). Bei den in Tabelle 1 aufgeführten Beispielen und Vergleichsbeispielen entspricht "+" einer Abnahme der Schlagzähigkeit nach Lagerung von weniger als 30% im Vergleich zur ungelagerten Probe. Vergleichend dazu bedeutet "-" eine um 50% reduzierte Schlagzähigkeit und "--" eine um über 60% reduzierte Schlagzähigkeit im Vergleich zur zugehörigen ungelagerten Probe.

**Edukte**

**PBT:** Polybutylenterephthalat mit einer intrinsichen Viskosität von 94 $g/cm^3$ (Pocan® B1300, Handelsprodukt der Lanxess Deutschland GmbH, Köln)

**PET:** Polyethylenterephthalat mit einer intrinsichen Viskosität von 80 $g/cm^3$ (LIGHTER™ C93, Fa. Equipolymers, Schkopau, Deutschland)

**SAN:** Styrol-Acrylnitril-Copolymer (Luran® SAN M 60, Fa. Ineos Styrolution, Frankfurt, Deutschland)

**Glasfaser** (GF): Mit silanhaltigen Verbindungen beschlichtete Glasfaser mit einem Durchmesser von 10 $\mu m$ (CS 7967, Handelsprodukt der Lanxess N.V., Antwerpen, Belgien)

**Hydrolysestabilisator:** Oligomeres Reaktionsprodukt aus Bisphenol A und Epichlorhydrin (siehe Formel (I)), einem Epoxidäquivalent-Gewicht (DIN 16945) von 500 bis 700 g/eq und einem Erweichungspunkt (Mettler, DIN 51920) zwischen 75 und 90°C. [CAS Nr. 25068-38-6]

**Weitere Additive:** insbesondere handelsüblicher Phosphitstabilisator und/oder Entformungsmittel: Licowax® E der Clariant International Ltd., Muttenz, Schweiz in einem Massenanteil von 1,0 bezogen auf 100 Massenanteile PBT für alle Beispiele.

Aus der **Tabelle** 1 wird ersichtlich, dass Erzeugnisse auf Basis erfindungsgemäßer Zusammensetzungen (Beispiele 1 und 2) im Vergleich zu Erzeugnissen auf Basis von Polymerzusammensetzungen basierend ausschließlich auf PBT als einziger Polymerkomponente (Vergleich 1) oder auf Basis einer Mischung allein aus PBT und PET (Vergleich 2) deutlich bessere Lasertransmissionswerte bei gleichbleibend guten mechanischen Eigenschaften aufweisen. Zusätzlich zeigt die erfindungsgemäße Zusammensetzung (Beispiel 2) nach Klimalagerung gleichbleibend gute Hydrolysebeständigkeit und deutlich verbesserte Lasertransmission.

**Tabelle 1**

| Rezepturen | Vgl. 1 | Vgl. 2 | Vgl. 3 | Bsp. 1 | Bsp. 2 |
|---|---|---|---|---|---|
| PBT | 100 | 100 | 100 | 100 | 100 |
| PET | 0 | 76 | 0 | 8,4 | 8,7 |
| SAN | 0 | 0 | 0 | 8,4 | 8,7 |
| GF | 43 | 76 | 48 | 50 | 52 |
| Hydrolysestabilisator | 0 | 0 | 3,2 | 0 | 3,4 |
| **Messergebnisse** | | | | | |
| LT (780 - 1100 nm) | - | 0 | -- | + | + |
| Biegefestigkeit | + | + | 0 | + | + |
| IZOD Schlagzähigkeit | + | + | + | + | + |
| IZOD Schlagzähigkeit nach 1000 Stunden bei 85°C und 85% rel. Feuchte | - | -- | + | - | + |

Mengenangaben der Komponenten in Tabelle 1 jeweils in Massenanteilen.

## Patentansprüche

1. Zusammensetzungen und daraus herzustellende Erzeugnisse enthaltend

   A) Polybutylenterephthalat,
   B) Polyethylenterephthalat,
   C) wenigstens ein Styrol-Acrylnitril-Copolymerisat und
   D) wenigstens einen Verstärkungsstoff.

2. Zusammensetzungen und daraus herzustellende Erzeugnisse gemäß Anspruch 1, **dadurch gekennzeichnet, dass** diese bezogen auf A) 100 Massenanteile Polybutylenterephtalat,

   B) 0,5 bis 34 Massenanteile Polyethylenterephtalat,
   C) 0,5 bis 34 Massenanteile wenigstens eines Styrol-Acrylnitril-Copolymerisats, und
   D) 10 bis 200 Massenanteile wenigstens eines Verstärkungsstoffes enthalten.

3. Zusammensetzungen gemäß einem der Ansprüche 1 oder 2, **dadurch gekennzeichnet, dass** diese zusätzlich E) wenigstens einen Hydrolysestabilisator enthalten.

4. Zusammensetzungen gemäß Anspruch 3, **dadurch gekennzeichnet, dass** diese bezogen auf A) 100 Massenanteile Polybutylenterephthalat 0,01 bis 30 Massenanteile wenigstens eines Hydrolysestabilisators enthalten.

5. Zusammensetzungen gemäß einem der Ansprüche 1 bis 4, **dadurch gekennzeichnet, dass** als Komponente D) Glasfasern eingesetzt werden.

6. Zusammensetzungen gemäß einem der Ansprüche 1 bis 5, **dadurch gekennzeichnet, dass** als Komponente C) wenigstens ein Styrol-Acrylnitril-Copolymerisat auf Basis von Vinylaromaten (C.1) und Vinylcyaniden (C.2) eingesetzt wird.

7. Zusammensetzungen gemäß Anspruch 6, **dadurch gekennzeichnet, dass** 100 Massenanteile eines Copolymerisats C)

   (C.1) 50 bis 99 Massenanteile Vinylaromaten und/oder kernsubstituierte Vinylaromaten, und
   (C.2) 1 bis 50 Massenanteile Vinylcyanide enthalten.

8. Zusammensetzungen gemäß Anspruch 7, **dadurch gekennzeichnet, dass** als (C.1) Styrol, $\alpha$-Methylstyrol, p-Methylstyrol, p-Chlorstyrol, und/oder Methacrylsäure-($C_1$-$C_8$)-Alkylester eingesetzt werden.

9. Zusammensetzungen gemäß Anspruch 7, **dadurch gekennzeichnet, dass** als (C.2) Acrylnitril oder Methacrylnitril, und/oder (Meth)Acrylsäure-($C_1$-$C_8$)-Alkylester, und/oder Derivate ungesättigter Carbonsäuren eingesetzt werden.

10. Zusammensetzungen gemäß einem der Ansprüche 1 bis 9, **dadurch gekennzeichnet, dass** (C.1) aus mindestens einem der Monomere Styrol, $\alpha$-Methylstyrol und Methylmethacrylat ausgewählt wird.

11. Zusammensetzungen gemäß einem der Ansprüche 1 bis 9, **dadurch gekennzeichnet, dass** (C.2) aus mindestens einem der Monomere Acrylnitril, Maleinsäureanhydrid und Methylmethacrylat ausgewählt wird.

12. Zusammensetzungen gemäß einem der Ansprüche 1 bis 9, **dadurch gekennzeichnet, dass** als (C.1) Styrol und als (C.2) Acrylnitril eingesetzt wird.

13. Zusammensetzungen gemäß einem der Ansprüche 3 bis 12, **dadurch gekennzeichnet, dass** als Komponente E) Hydrolysestabilisator epoxidierte natürliche Öle, epoxidierte Fettsäureester oder synthetische epoxydierte Verbindungen eingesetzt werden.

14. Verwendung wenigstens eines Styrol-Acrylnitril-Copolymerisats, vorzugsweise in Form einer Zusammensetzung gemäß einem der Ansprüche 1 bis 13, zur Herstellung verstärkter, lasertransparenter, Polybutylenterephthalat basierter Erzeugnisse.

**15.** Verwendung gemäß Anspruch 14, **dadurch gekennzeichnet, dass** die Lasertransparenz verstärkter, Polyethylenterephthalat und Polybutylenterephthalat basierter Erzeugnisse verbessert wird.

**16.** Verfahren zur Steigerung der Lasertransparenz verstärkter Polybutylenterephthalat und Polyethylenterephthalat basierter Erzeugnisse, **dadurch gekennzeichnet, dass** wenigstens ein Styrol-Acrylnitril-Copolymerisat den zur Verarbeitung vorgesehenen Formmassen zugesetzt wird.

Europäisches Patentamt
European Patent Office
Office européen des brevets

# EUROPÄISCHER RECHERCHENBERICHT

Nummer der Anmeldung
EP 16 18 5856

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2005/165176 A1 (MATSUSHIMA MITSUNORI [JP] ET AL) 28. Juli 2005 (2005-07-28)<br>* Beispiel 4 *<br>* Ansprüche 1,9 *<br>* Absätze [0027], [0033] *<br>* Absatz [0084]; Abbildungen *<br>----- | 1-16 | INV.<br>C08L67/02<br>B29C65/16<br>B29C65/00 |
| X | JP 2003 292752 A (TORAY INDUSTRIES) 15. Oktober 2003 (2003-10-15)<br>* Zusammenfassung *<br>* Seiten - *<br>* Absatz [0018] *<br>----- | 1-16 | |
| X | EP 0 392 357 A2 (BASF AG [DE]) 17. Oktober 1990 (1990-10-17)<br>* Anspruch 1 *<br>* Beispiel 2 *<br>----- | 1-12 | |
| X | DE 199 29 302 A1 (BASF AG [DE]) 28. Dezember 2000 (2000-12-28)<br>* Ansprüche 1,4 *<br>* Beispiel; Tabelle 1 *<br>----- | 1-12 | RECHERCHIERTE SACHGEBIETE (IPC) |
| X | EP 1 553 138 A1 (TORAY INDUSTRIES [JP]) 13. Juli 2005 (2005-07-13)<br>* Ansprüche 1-8 *<br>* Absatz [0144]; Beispiel 23 *<br>* Absätze [0074], [0079] - [0081] *<br>----- | 1-13 | C08L<br>B29C |

Der vorliegende Recherchenbericht wurde für alle Patentansprüche erstellt

2

| Recherchenort | Abschlußdatum der Recherche | Prüfer |
|---|---|---|
| Den Haag | 2. Februar 2017 | Schlicke, Benedikt |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 16 18 5856

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-02-2017

| Im Recherchenbericht angeführtes Patentdokument | Datum der Veröffentlichung | Mitglied(er) der Patentfamilie | Datum der Veröffentlichung |
|---|---|---|---|
| US 2005165176 A1 | 28-07-2005 | CN 1646629 A | 27-07-2005 |
| | | JP 4641377 B2 | 02-03-2011 |
| | | JP 5237348 B2 | 17-07-2013 |
| | | JP 2011052223 A | 17-03-2011 |
| | | US 2005165176 A1 | 28-07-2005 |
| | | US 2007135587 A1 | 14-06-2007 |
| | | WO 03085046 A1 | 16-10-2003 |
| JP 2003292752 A | 15-10-2003 | JP 4911548 B2 | 04-04-2012 |
| | | JP 2003292752 A | 15-10-2003 |
| EP 0392357 A2 | 17-10-1990 | DE 3911828 A1 | 18-10-1990 |
| | | EP 0392357 A2 | 17-10-1990 |
| | | JP 2845555 B2 | 13-01-1999 |
| | | JP H02294356 A | 05-12-1990 |
| DE 19929302 A1 | 28-12-2000 | AT 245675 T | 15-08-2003 |
| | | BR 0011781 A | 12-03-2002 |
| | | CA 2369840 A1 | 04-01-2001 |
| | | DE 19929302 A1 | 28-12-2000 |
| | | EP 1194484 A1 | 10-04-2002 |
| | | ES 2203494 T3 | 16-04-2004 |
| | | JP 2003503574 A | 28-01-2003 |
| | | MY 122669 A | 29-04-2006 |
| | | US 6689838 B1 | 10-02-2004 |
| | | WO 0100729 A1 | 04-01-2001 |
| EP 1553138 A1 | 13-07-2005 | AT 425225 T | 15-03-2009 |
| | | CN 1668695 A | 14-09-2005 |
| | | EP 1553138 A1 | 13-07-2005 |
| | | US 2006142438 A1 | 29-06-2006 |
| | | WO 2004029154 A1 | 08-04-2004 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2949703 A1
- JP 2004315805 A
- DE 10330722 A1
- DE 2035390 A
- DE 2248242 A
- US 4937285 A


### In der Beschreibung aufgeführte Nicht-Patentliteratur


- *Kunststoffe 87,* 1997, vol. 3, 348-350
- *Kunststoffe 88,* 1998, vol. 2, 210-212
- *Kunststoffe 87,* 1997, vol. 11, 1632-1640
- *Plastverarbeiter 50,* 1999, vol. 4, 18-19
- *Plastverarbeiter 46,* 1995, vol. 9, 42-46
- Kunststoff-Handbuch. Karl Hanser Verlag, 1973, vol. VIII, 695 ff
- *Angew. Chem.,* 2000, vol. 112, 2292-2310
- **GÄCHTER ; MÜLLER.** Kunststoff-Additive. Hanser-Verlag, 1989
- Plastics Additives Handbook. Hanser-Verlag, 2001
- **ULLMANN.** Enzyklopädie der Technischen Chemie. 1980, vol. 19, 280 ff
- **THIELEN ; HARTWIG ; GUST.** Blasformen von Kunststoffhohlkörpern. Carl Hanser Verlag, 2006, 127-129